# EUROPEAN PATENT SPECIFICATION

(11) **EP 3 544 930 B1**
(45) Date of publication and mention of the grant of the patent: **18.05.2022**
(21) Application number: 17872979.4
(22) Date of filing: 22.11.2017
(51) Int. Cl.: C02F 1/32, E03B 1/04, E03C 1/00

(54) **SENSOR SYSTEM FOR A SYSTEM ALLOWING FOR PURIFICATION AND RECYCLING OF WATER OR SEPARATION OF WATER**
SENSORSYSTEM FÜR EIN SYSTEM ZUR ERMÖGLICHUNG DER AUFBEREITUNG UND WIEDERVERWENDUNG VON WASSER ODER DER TRENNUNG VON WASSER
SYSTÈME DE CAPTEURS POUR UN SYSTÈME PERMETTANT LA PURIFICATION ET LE RECYCLAGE D'EAU OU LA SÉPARATION D'EAU

(30) Priority: 25.11.2016 SE 1651552
(43) Date of publication of application: 02.10.2019
(73) Proprietor: Orbital Systems AB, 211 20 Malmö (SE)
(72) Inventor: OSCARSON, Joakim, 266 52 Vejbystrand (SE); RIDELL, Michael, 245 42 Staffanstorp (SE); NILSSON, Mikael, 231 44 Trelleborg (SE)
(74) Representative: AWA Sweden AB
(86) International application number: PCT/SE2017/051158
(87) International publication number: WO 2018/097789

(56) References cited:
- WO-A1-2013/095278
- WO-A1-2015/094109
- WO-A1-2016/076784
- WO-A1-2018/097787
- DE-A1- 4 421 668
- US-A1- 2006 124 861
- US-A1- 2006 192 137

## Description

### Field of the invention

The present invention relates to a system allowing for purification and recycling of water or separation of water.

### Technical Background

There are existing systems allowing for purification and recycling of water or separation of water. One is disclosed in DE4421668A1. Another one is disclosed in WO 2013/095278 which describes a hybrid device for a recirculation shower, allowing purification and either recycling of water or discarding of water, which hybrid device comprises a recirculation loop and a filter system with a pre-filter and a nano-filter. The sensor system used comprises at least one filter quality sensor and a water quality sensor. Furthermore, in WO2015/094107 there is disclosed a hybrid device allowing purification and either recycling of water or discarding of water, said hybrid device comprising a recirculation loop, a filter system and multiple conductivity sensors. Yet another system is disclosed in NL1039131 which describes a device and method for measuring the water quality of shower water. The sensor system comprises at least one sensor from the group of UV sensors or conductivity sensors.

One aim of the present invention is to provide a system allowing for purification and recycling of water or separation of water, which comprises sensors providing the basis to optimise the selection decision made when the system either goes into recirculation or separation mode.

### Summary of the invention

The stated purpose above is achieved by a system allowing for purification and recycling of water or separation of water, as defined in claim 1.

The expression "give input to a control system" implies giving a value of the parameter(s) detected by a specific sensor type according to the present invention. The present invention is directed to providing a system comprising sensors, which provide an decision of either recycling of water or separation of water in the system, said system e.g. being a shower, a washing machine, dishwasher or the like. The control system may be of any type available on the market today, e.g. such including a microprocessor.

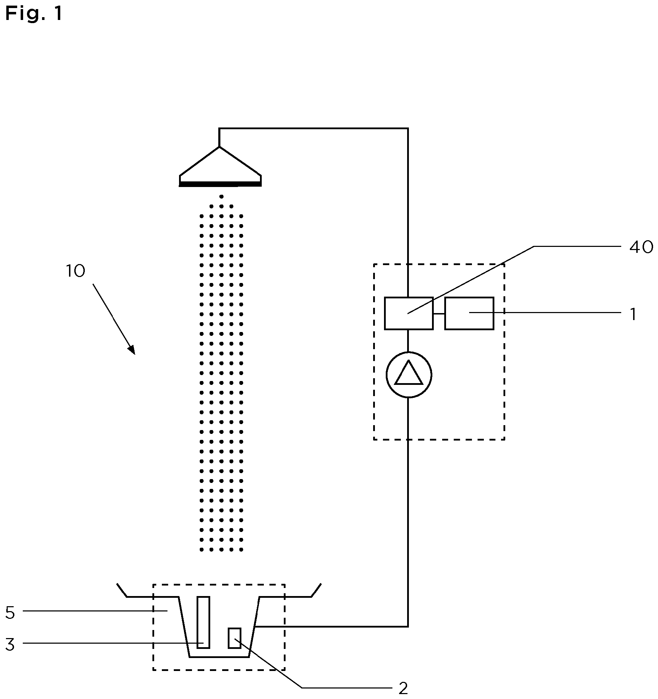

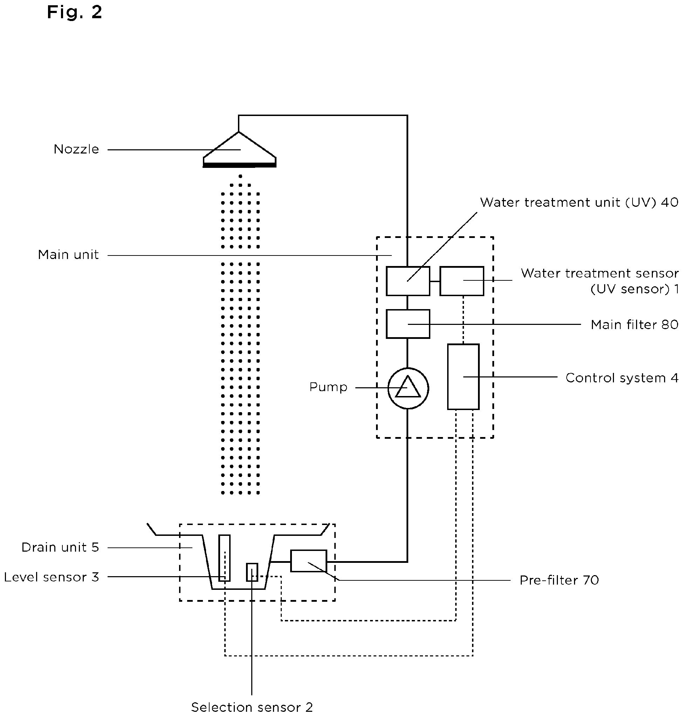

As stated in claim 1, the second sensor is directed to indicating the water quality. This is performed by using a parameter which may be translated into a water quality measure. One example thereof disclosed below is conductivity, but also others are totally possible. Moreover, the first sensor is directed to indicating the function of the UV light treatment

in the water treatment unit, which according to the present invention implies that the sensor indicates if the water treatment unit functions as intended and/or if the treatment is strong enough to deliver an intended water quality at this stage. As hinted above, the first sensor then also gives an input, i.e. "value", to the control system with reference to the water quality in that sensor measuring point which in turn affects the decision made in the control system with reference to the selection step if water should be recirculated, where the water quality is above the set lowest level, or if water should be separated off, i.e. when the water quality is too low. As noted in the examples shown in fig. 1 and 2, this selection can suitably be performed in the drain of the system allowing for purification and recycling of water or separation of water.

### Brief description of the drawings

In fig. 1 there is shown a system allowing for purification and recycling of water or separation of water, which is outside of the scope of the present invention.
Fig. 2 shows a system intended for allowing for purification and recycling of water or separation of water, according to one specific embodiment of the present invention.

### Specific embodiments of the invention

Below specific embodiments of the present invention are discussed. According to the present invention, the water treating unit comprises a light unit which is a UV lamp generating a UV light. The light unit may be a UV-LED unit or a conventional UV unit. Furthermore, the wavelength and colour of the light should be set to optimise for the treatment of water to purify it from contaminants.

The first sensor is a UV sensor. Furthermore, the treatment unit may be a combined water heater and water treatment device where the sensor is a UV sensor which at least gives an indication of the function of the UV treatment. If the light reaches the UV sensor, this is an indication that light penetrates the water flow space contained inside the water treatment unit. The UV lamp is preferably surrounded by a transparent protective cover, e.g. made of a plastic or glass material, such as a quartz glass, to make sure not to contaminate the UV lamp. The space between the quartz glass and the inside wall of the single container holds the water to be treated.

The UV light is intended to penetrate all of that space as effectively as possible. Therefore, it is important to make sure that the UV lamp and also the quartz glass is free from contaminants and fouling. Therefore, to enable cleaning of the transparent protective cover is of importance in relation to the present invention. Therefore, according to one specific embodiment of the present invention, the light unit is a UV lamp being surrounded by a transparent protective cover and wherein both the UV lamp and the transparent protective cover are removable from the bottom of the single container.

In addition to giving an indication of the light penetrating the water space, the first sensor may also give other pieces of information, parameters or responses. One such is turbidity, which in turn can be used as a parameter on the water quality in that measuring point.

Also other types of sensors are possible to use as complements. Examples are turbidity sensors (or combined UV/turbidity sensors), IR sensors or FTIR (Fourier Transform Infrared Spectroscopy) sensors.

According to a specific embodiment of the present invention, the second sensor is a conductivity sensor. One suitable example is an EC (electrical conductivity) sensor.

The second sensor functions as a selection sensor, i.e. a sensor giving a value on a parameter to the control system where said parameter has a limit value below which water is separated off and not recirculated. According to the present invention, the first sensor type complements the second sensor in this operation. This implies that also the first sensor provides a value on a parameter to the control system which affects the selection decision made by the control system.

Furthermore, it should also be noted that this feature implies that there is a contribution also from the first sensor to the entire control system and algorithm(s) and it is improved over time with reference to the selection decision. Thus, a "learning" sensor system or control system is provided by the present invention.

Furthermore, according to the present invention, the second sensor type is positioned in a drain of the system allowing for purification and recycling of water or separation of water. This is shown in fig. 1 and 2. This position provides a second measuring point in the system, which is not the same as the position for the first sensor type.

Moreover, according to the present invention, the sensor system also comprises a third sensor, which is a level sensor in a drain of the system allowing for purification and recycling of water or separation of water. Moreover, according to the present invention, the third sensor also gives input to the control system with respect to a selection decision of either recycling of water in the system or separation of water from the system. This implies that also this sensor may have the same sort of technical contribution to the learning control system.

The level sensor measures the water level in the floor drain of the system (see the shower example in fig. 1 and 2). As this level may vary over time based on the usage profile of e.g. a shower this input or value may also become a parameter which the control system takes into account when making the selection decision. As an example, when someone is showering a long hair, then the flow of water will decrease firstly and then increase vigorously. This flow profile could then indicate that a user is showering the hair, and shampoo or conditioner is thus being flushed into the drain. This is also an input which the control system can take into account when the selection decision is made.

Also this feature of the third sensor is a secondary use of that sensor. The main purpose of such a sensor is otherwise to prevent air from being introduced into the system when the level of water is too low. The same double functionality is valid for a UV sensor as the first sensor type as this sensor first of all controls the UV lamp and glass surrounding the same (or in fact that light reaches the sensor) but also the water quality as a secondary parameter. In both of the cases these sensors complement the second type of sensor regarding providing information to a control system with reference to performing a selection decision in the control system.

Therefore, according to the present invention, the system comprises a first sensor directed to indicate the function of the UV light treatment in the water treatment unit, a second sensor directed to indicate the water quality, and also a third sensor being a level sensor in a drain of the system allowing for purification and recycling of water or separation of water. As should be understood, this sensor system according to the present invention has the following properties, which properties are also linked to the control system:
- it measures the functionality of the water treatment, i.e. it measures the UV dose, which is an indicator of the water treatment effect;
- it measures the water quality which in turn may be the key indicator of if water is to be recirculated in the system or separated off (also in real-time); and
- it measures the water level in the recirculation tank, which in turn gives input to the flow regulation, e.g. so that air is not introduced in the system.

It should however be noted that the present invention also enables the use of information from the second sensor and/or third sensors above to give a response on the water quality. For instance, a second sensor may also act as a turbidity sensor, where a certain form of measurement or indication may be directed to dirty or contaminated water, either based on settings in themselves or based on historic data in the control system from that sensor. Moreover, the third sensor being the level sensor may also show an increase in level etc. which in turn is directed to a certain user pattern, e.g. shampoo or conditioner use, and which as such also indicates a contaminated water, i.e. gives a response on water quality.

According to an embodiment falling outside of the scope of the invention, which is defined by the claims, may be provided in one and the same sensor, e.g. a UV sensor also acting as a turbidity sensor. It should be noted that in such a case the system may of course comprise several such sensors or may be combined with other sensors, of any type, also such according to the first, second and third type discussed herein.

Furthermore, the control system may be adapted to learn the behaviour or response behaviour over time for all the sensors, and may as such function as a learning sensor system.

Moreover, in relation to the above it should be noted that it is of interest to understand the meaning of the word "drain" in the context of the present invention. The word "drain" according to the present invention implies a point leading to the sewage, but in fact is not the sewage in itself. Moreover, the system according to the present invention may also comprise a unit like a recirculation tank positioned adjacent to the drain. The separation point in that case may act as the interface between the recirculation tank and the drain leading to the sewage. Furthermore, in such a case the third sensor type is a level sensor for the recirculation tank.

According to yet another specific embodiment of the present invention, the system comprises a filter system, which filter system comprises a rough filter unit positioned in a drain of the system and a subsequent mid/fine filter unit.

The rough filter unit may be regarded as a pre-filter (see fig. 2). The rough filter unit is preferably a removable mesh filter. Furthermore, the mid/fine filter unit may be regarded as a main filter (see fig. 2). These filters interact to optimise the filtering profile so that the rough filter unit filters off larger particles, e.g. particles above 70 micrometer and hair and other contaminants, while the mid/fine filter unit ensures to absorb finer particles, bacteria, and the like.

Furthermore, as mentioned above, according to one specific embodiment, the water treatment unit is enclosed in a combined water heater and water treatment unit.

### Detailed description of the drawings

In fig. 1 there is shown a system 10 allowing for purification and recycling of water or separation of water, which is not according to according the present invention. The system 10 comprises a water treatment unit 40, a drain 5 and a pump. In this case the system 10 is a shower so also a nozzle is provided. The nozzle can of course also be complemented with or replaced by a handheld shower unit. The system 10 comprises a sensor system comprising one first sensor 1 directed to indicating the function of a water treating source in the water treatment unit 40. The sensor system also comprises a second sensor 2 directed to indicating the water quality, which in this case is positioned in the drain 5. Furthermore, the drain also holds a third sensor 3, which in this case is a level sensor.

Fig. 2 shows a shower system 10 allowing for purification and recycling of water or separation of water, according to one specific embodiment of the present invention. In this case the system 10 comprises a water treatment unit 40, suitably a combined water heater and water treatment unit, which comprises a UV source, which is connected to a first sensor (a UV sensor). Moreover, the system 10 also comprises a filter system comprising a main filter 80 being the mid/fine filter and a pre-filter 70 (removable mesh filter). Furthermore, a pump, control system 4, nozzle (and/or handheld shower) and of course piping is also arranged in the system 10. In the drain unit 5, there are provided a second sensor 2 (main "selection sensor") and also a third sensor 3 being a level sensor. Both of these sensors 2, 3 are also connected to the control system 4.

## Claims

1. A system (10) comprising:
- a drain (5) allowing for purification and recycling of water or separation of water;
- a water treatment unit (40) comprising a UV lamp generating a UV light for treating the water recycled from the drain;
- a UV sensor (1) directed to give an indication of the function of the UV light treatment by giving an indication of said UV light penetrating the water flow space contained inside the water treatment unit;
- a second sensor (2) directed to indicating the water quality, wherein the second sensor (2) is positioned in the drain,
- a level sensor (3) positioned in the drain; and
- a control system (4);
wherein the UV sensor (1), the second sensor (2) and also the level sensor (3) give input to the control system (4) with respect to a selection decision of either recycling of water in the system (10) or separation of water from the system (10).

2. The system (10) according to claim 1, wherein the UV sensor (1) is complemented by a turbidity sensor.

3. The system (10) according to claim 1 or 2, wherein the second sensor (2) is a conductivity sensor.

4. The system (10) according to any of the preceding claims, further comprising a filter system for filtering the water recycled from the drain, wherein the filter system comprises:
a rough filter unit (70) positioned in the drain,
a subsequent mid/fine filter unit (80).

5. The system (10) according to any of the preceding claims, wherein the water treatment unit (40) is enclosed in a combined water heater and water treatment unit.

## Patentansprüche

1. System (10), umfassend:
- einen Abfluss (5), der Reinigung und Recycling von Wasser oder Trennung von Wasser ermöglicht;
- eine Wasserbehandlungseinheit (40), die eine UV-Lampe umfasst, die ein UV-Licht zum Behandeln des aus dem Abfluss recycelten Wassers erzeugt;
- einen UV-Sensor (1), der angewiesen wird, um eine Angabe der Funktion der UV-Lichtbehandlung zu geben, indem eine Angabe des UV-Lichts, das den Wasserflussraum durchdringt, der in der Wasserbehandlungseinheit enthalten ist, gegeben wird;
- einen zweiten Sensor (2), der angewiesen wird, um die Wasserqualität anzugeben, wobei der zweite Sensor (2) in dem Abfluss positioniert ist,
- einen Pegelsensor (3), der in dem Abfluss positioniert ist; und
- ein Steuersystem (4);
wobei der UV-Sensor (1), der zweite Sensor (2) und auch der Pegelsensor (3) Eingabe an das Steuersystem (4) in Bezug auf eine Auswahlentscheidung geben, entweder das Wasser in dem System (10) zu recyceln oder Wasser aus dem System (10) zu separieren.

2. System (10) nach Anspruch 1, wobei der UV-Sensor (1) durch einen Trübungssensor ergänzt wird.

3. System (10) nach Anspruch 1 oder 2, wobei der zweite Sensor (2) ein Leitfähigkeitssensor ist.

4. System (10) nach einem der vorhergehenden Ansprüche, des Weiteren umfassend ein Filtersystem zum Filtern des Wassers, das aus dem Abfluss recycelt wurde, wobei das Filtersystem umfasst:
eine Grobfiltereinheit (70), die in dem Abfluss positioniert ist,
eine nachfolgende Mittel-/Feinfiltereinheit (80).

5. System (10) nach einem der vorhergehenden Ansprüche, wobei die Wasserbehandlungseinheit (40) in einer kombinierten Wassererhitzungs- und Wasserbehandlungseinheit umschlossen ist.

## Revendications

1. Système (10) comprenant :
- un siphon (5) permettant la purification et le recyclage d'eau ou la séparation d'eau ;
- une unité de traitement d'eau (40) comprenant une lampe UV générant un rayonnement UV destiné à traiter l'eau recyclée depuis le siphon ;
- un capteur UV (1) servant à donner une indication du fonctionnement du traitement par rayonnement UV en donnant une indication de la pénétration dudit rayonnement UV dans l'espace d'écoulement d'eau contenu à l'intérieur de l'unité de traitement d'eau ;
- un deuxième capteur (2) servant à indiquer la qualité de l'eau, le deuxième capteur (2) étant positionné dans le siphon ;
- un capteur de niveau (3) positionné dans le siphon ; et
- un système de commande (4) ;
dans lequel le capteur UV (1), le deuxième capteur (2) et également le capteur de niveau (3) donnent une entrée au système de commande (4) par rapport à une décision de sélection soit de recyclage d'eau dans le système (10), soit de séparation d'eau du système (10).

2. Système (10) selon la revendication 1, dans lequel le capteur UV (1) est complété par un capteur de turbidité.

3. Système (10) selon la revendication 1 ou 2, dans lequel le deuxième capteur (2) est un capteur de conductivité.

4. Système (10) selon l'une quelconque des revendications précédentes, comprenant en outre un système de filtration destiné à filtrer l'eau recyclée depuis le siphon, le système de filtration comprenant :
une unité de filtration grossière (70) positionnée dans le siphon,
une unité de filtration moyenne/fine consécutive (80) .

5. Système (10) selon l'une quelconque des revendications précédentes, dans lequel l'unité de traitement d'eau (40) est incorporée dans une unité de chauffage d'eau et traitement d'eau combinée.
